# FASCICULE DE BREVET EUROPEEN

(11) **EP 2 981 879 B1**
(45) Date de publication et mention de la délivrance du brevet: **14.06.2017**
(21) Numéro de dépôt: 14718343.8
(22) Date de dépôt: 28.03.2014
(51) Int. Cl.: G06F 3/044, G06F 1/16, H04M 1/02, G06F 3/041

(54) **DISPOSITIF POUR INTERAGIR, SANS CONTACT, AVEC UN APPAREIL ÉLECTRONIQUE ET/OU INFORMATIQUE, ET APPAREIL ÉQUIPÉ D'UN TEL DISPOSITIF**
VORRICHTUNG ZUR BERÜHRUNGSLOSEN INTERAKTION MIT EINER ELEKTRONISCHEN VORRICHTUNG UND/ODER EINER COMPUTERVORRICHTUNG UND MIT SOLCH EINER VORRICHTUNG AUSGESTATTETEN VORRICHTUNG
DEVICE FOR CONTACTLESS INTERACTION WITH AN ELECTRONIC AND/OR COMPUTER APPARATUS, AND APPARATUS EQUIPPED WITH SUCH A DEVICE

(30) Priorité: 02.04.2013 FR 1352970
(43) Date de publication de la demande: 10.02.2016
(73) Titulaire: QuickStep Technologies LLC, Wilmington, DE 19801 (US)
(72) Inventeur: ROZIERE, Didier, F-30900 Nîmes (FR); BLONDIN, Christophe, F-30900 Nîmes (FR)
(74) Mandataire: Lang, Johannes
(86) Numéro de dépôt international: PCT/EP2014/056257
(87) Numéro de publication internationale: WO 2014/161775

(56) Documents cités:
- EP-A2- 2 241 962
- FR-A1- 2 893 711
- US-A1- 2011 169 770

## Description

### Domaine technique

La présente invention concerne un dispositif pour interagir, sans contact, avec un appareil électronique et/ou informatique comprenant au moins deux parties formant entre-elles un angle non nul. Elle concerne également un appareil électronique/informatique équipé d'un tel dispositif.

Le domaine de l'invention est plus particulièrement, mais de manière non limitative, celui des interfaces homme machine sans contact, mettant en oeuvre une technologie de détection capacitive.

### Etat de la technique

De plus en plus d'appareils portables comme les ordinateurs portables sont équipés d'un écran tactile et apportent des fonctions d'Interface Homme Machine (IHM) proches de celles des appareils portables, tels que les Smartphones et tablettes tactiles. Ces appareils utilisent comme interface des dalles tactiles transparentes sur les écrans et opaques au niveau des claviers.

La plupart de ces dalles utilisent la technologie capacitive. Cette technologie très répandue de nos jours permet de détecter un ou plusieurs objets (doigts, stylet...) en contact sur la surface tactile.

On connait le brevet FR 2 893 711, déposé par la Demanderesse, qui décrit une solution capacitive permettant de détecter la position bidimensionnelle d'un doigt sur une surface de commande à plusieurs cm de distance et d'une main à plus de 10cm.

On connait également la demande de brevet, déposée par la Demanderesse, publiée sous le numéro FR 2 971 066 A1 qui décrit une interface permettant de déterminer, en plus de la position bidimensionnelle d'un objet dans le plan formé par une surface de commande, une distance verticale entre la surface de commande et l'objet et de déclencher des fonctions spécifiques en fonction de la valeur de cette distance verticale, telles qu'une navigation en profondeur.

US 2011/169770 A1 décrit un dispositif pour interagir sans contact correspondant au préambule de la revendication 1.

La portée en détection et le fonctionnement de toutes ces interfaces de détection dépend toutefois de l'environnement électrostatique de la dalle. La portée en détection de proximité est par exemple dégradée lorsque l'appareil n'est pas plat et comprend, en plus d'une première partie munie de l'interface de détection, une deuxième partie formant un angle non nul avec la première partie. Cette deuxième partie créé des interférences dans le champ électrostatique généré par les électrodes de l'interface de détection, et dégrade les performances et le fonctionnement de l'interface de détection, en particulier au niveau de l'intersection de la deuxième partie avec la première partie.

Les solutions de l'état de la technique ne sont donc pas adaptées pour des appareils comprenant au moins deux parties formant entre-elles un angle non-nul.

Un but de la présente invention est de proposer un dispositif pour interagir sans contact avec un appareil comprenant au moins deux parties formant entre-elles un angle non-nul.

Un autre but de la présente invention est de proposer un dispositif pour interagir sans contact avec un appareil comprenant au moins deux parties formant entre-elles un angle non nul et proposant une interaction sans contact tridimensionnelle à une plus grande distance comparé aux solutions existantes.

Enfin un autre but de la présente invention est de proposer un dispositif pour interagir sans contact avec un appareil comprenant au moins deux parties formant entre-elles un angle non nul permettant une interaction sans contact tridimensionnelle plus précise que les solutions existantes.

### Exposé de l'invention

L'invention fournit un dispositif tel que revendiqué dans la revendication 1 et un appareil muni d'un dispositif tel que revendiqué dans la revendication 10.

Au moins un de ces objectifs est atteint par un dispositif pour interagir sans contact, par l'intermédiaire d'au moins un objet de commande, avec un appareil électronique et/ou informatique, dit utilisateur, comprenant au moins une première et une deuxième parties qui, en utilisation, forment entre-elles un angle non nul, ledit dispositif comprenant :
- au moins un premier moyen de détection par technologie capacitive, et sans contact, dudit au moins un objet de commande par rapport à une première surface de commande définie par rapport à ladite première partie dudit appareil utilisateur, ledit premier moyen de détection comprenant plusieurs électrodes capacitives, dites de mesure ; au moins une, de préférence chacune, desdites d'électrodes de mesure étant gardée, par un premier moyen, dit de garde, à un potentiel alternatif, dit de garde, différent d'un potentiel, dit de masse, dudit au moins un objet de commande, et sensiblement identique au potentiel de ladite électrode de mesure.
- au moins un deuxième moyen, dit de garde, pour garder audit potentiel de garde, au moins partiellement, ladite deuxième partie dudit appareil utilisateur.

Le dispositif selon l'invention met en oeuvre une garde, à un potentiel de garde, des électrodes de mesure du premier moyen de détection, ce qui permet, d'une part d'éliminer les capacités de couplage parasites qui faussent la mesure capacitive utilisée pour la détection de l'objet de commande, et d'autre part d'éviter de réaliser une détection dans tous les sens autour de l'électrode capacitive, et donc de contrôler la ou les directions dans lesquelles la détection de l'objet de commande est réalisée. Par exemple, le fait de garder une électrode capacitive par une électrode garde disposée en face arrière et/ou latérales de l'électrode permet d'éviter ou de limiter la détection d'un objet de commande à l'arrière et/sur les côtés de la surface de commande.

De plus, le dispositif selon l'invention prévoit de mettre la deuxième partie de l'appareil utilisateur à un potentiel de garde, identique ou sensiblement identique au potentiel de garde des électrodes de mesure. Ainsi, le dispositif selon l'invention permet d'éviter que la deuxième partie de l'appareil utilisateur apporte des interférences dans le champ électrostatique créé par les électrodes de mesure du premier moyen de détection, et dégrade la détection et la portée en détection des électrodes de mesure du premier moyen de détection. Ainsi, la détection réalisée par le premier moyen de détection n'est pas dégradée.

Par conséquent, le dispositif selon l'invention permet de réaliser une interaction sans contact plus précise et de plus grande portée avec un appareil comprenant au moins deux parties formant entre-elles un angle non nul, et plus généralement une interaction sans contact plus adaptée à un tel appareil comparée aux solutions existantes.

Dans la présente demande par « détection ou donnée de détection » on entend une détection d'un ou d'une combinaison quelconque des paramètres suivants relatifs à l'au moins un objet de commande : une ou des positions bidimensionnelle ou tridimensionnelle, une vitesse, une accélération, une forme, une dimension, etc.

Avantageusement, le dispositif selon l'invention peut comprendre :
- au moins un deuxième moyen de détection dudit au moins un objet de commande par rapport à une deuxième surface de commande formant un angle non nul par rapport à ladite première surface de commande et défini par rapport à la deuxième partie dudit appareil utilisateur ; et
- au moins un moyen de calcul pour déterminer, en fonction des détections réalisées par les premier et deuxième moyens de détection, et éventuellement d'un angle formé par les première et deuxième surfaces de commande, une donnée de détection, par exemple relative à une position/vitesse/accélération/forme/dimension, dudit au moins objet de commande.

Ainsi, le dispositif selon l'invention permet de former un volume de commande sans contact entre les première et deuxième parties de l'appareil, et en particulier entre les première et deuxième surfaces de commande. L'objet de commande plongé dans ce volume d'interaction est détecté en référence à chaque surface de commande, et une donnée relative à la position/vitesse/accélération/forme/dimension de l'objet de commande dans le volume de commande est obtenue, par le moyen de calcul, en croisant les données de détection de l'objet de commande par rapport à chacune des surfaces de commande, et éventuellement en fonction de l'angle entre les deux surfaces de commande.

En outre, une détection réalisée par rapport à deux surfaces de commande qui ne sont pas parallèles entre-elles permet de détecter un deuxième objet de commande qui serait caché par un premier objet de commande par rapport à l'une des surfaces de commande. En effet, si un deuxième objet de commande n'est pas vu par une des surfaces de commande parce qu'il se trouve derrière un premier objet de commande, alors ce deuxième objet sera nécessairement vu par l'autre surface de commande. Par exemple une main d'un utilisateur peut être cachée derrière son autre main, le dispositif selon l'invention permettant la détection des deux mains de l'utilisateur.

Selon un mode de réalisation préféré du dispositif selon l'invention, le deuxième moyen de détection peut comprendre plusieurs électrodes capacitives, dites de mesure ; au moins une, de préférence chacune, desdites d'électrodes de mesure étant gardée au potentiel de garde par le deuxième moyen de garde.

Les avantages décrits plus haut en référence au premier moyen de détection capacitif s'appliquent *mutatis mutandis* au deuxième moyen de détection.

Le potentiel de garde utilisé pour le deuxième moyen de détection peut être le même ou sensiblement le même que le potentiel de garde utilisé pour le premier moyen de détection.

Le principe utilisé dans la présente demande pour garder un potentiel de garde, une électrode de mesure ou plus généralement une partie d'un appareil, peut préférentiellement être celui décrit dans le brevet FR 2 893 711 déposé par la Demanderesse et auquel l'homme du métier peut se référer pour plus de précision.

Alternativement ou en plus, le deuxième moyen de détection peut comprendre au moins un ou une combinaison quelconque des moyens suivants :
- un réseau de pixels optiques,
- un réseau de diodes infrarouges,
- un réseau de capteurs optique de luminosité,
- au moins un émetteur optique associé à au moins un récepteur optique,
- au moins un émetteur ultrason associé à au moins un récepteur ultrason fonctionnant par triangulation ou trilatération, et
- au moins une caméra temps de vol.

Le premier moyen de détection peut également comprendre l'un ou une combinaison quelconque de ces moyens précités, en plus de la technologie capacitive.

Avantageusement, chacun des premier et deuxième moyen de détection peut en en outre agencé pour réaliser une détection d'au moins un, en particulier plusieurs, objet(s) de commande par contact de l'au moins un objet de commande avec la surface de commande associé à chaque moyen de détection.

Dans le cas où, l'une au moins des parties de l'appareil utilisateur est repositionnable par rotation par rapport à l'autre des parties de sorte que l'une au moins des surfaces de commande est repositionnable par rapport à l'autre surface de commande, le dispositif selon l'invention peut en outre comprendre un moyen de mesure de l'angle formé par lesdites surfaces de commande, i.e. entre les deux parties de l'appareil utilisateur.

Par exemple, l'angle formé par les surfaces de commande, i.e. par les parties de l'appareil utilisateur, peut être variable et modifié par l'utilisateur, en particulier en fonction des applications ou des conditions d'utilisation de l'appareil utilisateur.

Selon un exemple de réalisation non limitatif, le premier moyen de détection peut comprendre une ou plusieurs électrodes de mesures orientées ou en regard vers la deuxième partie de l'appareil et utilisées pour mesurer l'angle entre la première et la deuxième partie de l'appareil. Ces électrodes de mesures peuvent être disposées au niveau ou à proximité de l'intersection des plans formés par la première partie et la deuxième partie de l'appareil.

Avantageusement, le premier moyen de détection, respectivement le deuxième moyen de détection, peut être agencé pour détecter/mesurer :
- une position bidimensionnelle de l'objet de commande (116) dans la première surface de commande (118; 122), respectivement la deuxième surface de commande (122;118), et/ou
- une distance, dite verticale, entre l'objet de commande (116) et la première surface de commande (118; 122), respectivement la deuxième surface de commande (122;118).

Une telle détection de distance verticale par rapport au moins à l'une des surfaces de commande, préférentiellement par rapport à chacune des surfaces de commande, permet de disposer de données de détection redondantes et, ainsi de corriger/vérifier la détection de l'objet de commande réalisée par au moins un des moyens de détection. Une telle donnée de distance verticale est particulièrement intéressante lorsque l'objet de commande est éloigné de l'une des surfaces de commande ou des deux surfaces de commande.

Le premier, respectivement le deuxième, moyen de détection peut être agencé pour réaliser une détection de la position bidimensionnelle par contact, préférentiellement sans contact, de l'objet avec la première, respectivement la deuxième, surface de commande.

Le premier moyen de détection, respectivement le deuxième moyen de détection, peut avantageusement être intégré dans/sur la première surface de commande, respectivement dans/sur la deuxième surface de commande. La première surface, respectivement la deuxième surface, peut être une surface ou une face de la première partie de l'appareil utilisateur, respectivement de la deuxième partie de l'appareil utilisateur. Dans cette configuration, le dispositif selon l'invention présente une architecture plus compacte et est intégré, au moins partiellement, dans l'appareil utilisateur.

Selon une version non limitative, et particulièrement préférée du dispositif selon l'invention :
- le premier moyen de détection comprend un premier ensemble d'électrodes capacitives disposées dans/sur/derrière la première surface de commande, préférentiellement formée, au moins partiellement, par une paroi/surface/face de la première partie de l'appareil utilisateur disposée du côté de la deuxième partie dudit l'appareil utilisateur, et
- le deuxième moyen de détection comprend un deuxième ensemble d'électrodes capacitives disposées dans/sur/derrière la deuxième surface de commande, préférentiellement formée, au moins partiellement, par une paroi/surface/face de la deuxième partie de l'appareil utilisateur disposée du côté de la première partie dudit l'appareil utilisateur ;
au moins une, de préférence chacune, des électrodes de chaque ensemble d'électrodes étant gardée à un potentiel alternatif, dit de garde, différent d'un potentiel, dit de masse, de l'objet de commande, et sensiblement identique au potentiel de ladite électrode.

Selon une version avantageuse, la première surface de commande et/ou la deuxième surface de commande peut être une surface tactile.

Selon un autre aspect de l'invention il est proposé un appareil électronique et/ou informatique comprenant au moins une première et une deuxième parties qui, en utilisation, forment entre-elles un angle non nul, muni d'un dispositif selon l'invention.

L'angle entre les première et deuxième parties de l'appareil utilisateur peut être compris entre 1 et 179°, plus particulièrement compris entre 70° et 130°.

Un tel appareil peut être un ordinateur portable, un Smartphone, une console de jeu, une tablette munie d'un clavier tactile ou non, ou plus généralement tout appareil électronique/informatique comprenant deux parties, mobiles ou non entre-elles, qui, en utilisation, forment entre-elles un angle non nul.

Chaque partie peut comporter ou non un moyen de saisie tactile ou non, et/ou un écran d'affichage tactile ou non.

Plus particulièrement, au moins l'une des première et deuxième parties de l'appareil utilisateur peut comprendre un écran d'affichage, qui peut être tactile ou non, le premier moyen de détection, respectivement le deuxième moyen de détection, peut être intégré dans/sur/autour/en périphérie/derrière ledit écran d'affichage de sorte que la première surface de commande, respectivement la deuxième surface de commande, est formée par au moins une partie dudit écran d'affichage et/ou par un plan parallèle audit écran d'affichage.

Un tel écran d'affichage peut par exemple être un écran d'affichage qui se plie et déplie d'un ordinateur personnel portable, d'un téléphone, d'un Smartphone, d'un PDA, ou d'une console de jeu électronique tel que la Nintendo ® DS_{TM}, l'appareil utilisateur étant alors un de ces appareils.

En outre, au moins l'une des première et deuxième parties de l'appareil utilisateur peut comprendre une face, dite de saisie, comportant au moins un moyen de saisie de données, tel qu'un clavier, le premier moyen de détection, respectivement le deuxième moyen de détection, peut être intégré dans/sur/autour/en périphérie/derrière ladite face de saisie de sorte que la première surface de commande, respectivement la deuxième surface de commande, est formée par au moins une partie de ladite face de saisie et/ou par un plan parallèle à ladite face de saisie.

Une telle face de saisie peut par exemple être un clavier qui se plie et se déplie d'un ordinateur personnel portable, d'un téléphone, d'un Smartphone, d'un PDA, ou d'une console de jeu électronique.

Une telle face de saisie peut comprendre en plus ou alternativement un écran tactile pour réaliser une saisie.

Une telle face de saisie peut être formée uniquement par un clavier, qui forme une des parties de l'appareil utilisateur, et se détache manuellement de l'autre partie de l'appareil.

Dans le cas où une surface de commande est formée, au moins partiellement dans/sur/autour/en périphérie/derrière une face de saisie, alors la surface de commande peut être formée par une partie uniquement de la face de saisie, ladite face de saisie pouvant en outre comporter au moins une zone prévue pour y poser au moins une main d'un utilisateur lors d'une saisie, ou un objet utilisé lors d'une saisie, ladite zone étant mise au potentiel de masse.

Ainsi, l'appareil selon l'invention permet d'éviter que les mains d'un utilisateur, ou un objet de saisie tenu par un utilisateur, souhaitant réaliser une saisie sur le moyen de saisie, soient détectées par le moyen de détection intégré dans/sur/autour/en périphérie/derrière la face de saisie, et ainsi fausse la détection de l'objet de commande. L'appareil permet d'éviter que les mains ou l'objet de saisie soient détectés comme objet de commande alors l'utilisateur souhaite seulement réaliser une saisie sur le moyen de saisie.

Avantageusement, cette zone peut se trouver sur une partie de la face de saisie la plus éloignée de l'autre partie de l'appareil, qui peut être par exemple un écran d'affichage tel que décrit plus haut.

Plus particulièrement, la zone mise au potentiel de masse peut se trouver sur une partie de la face de saisie la plus éloignée d'un axe d'intersection des plans formés par les deux parties de l'appareil utilisateur. Un tel axe peut également être un axe de rotation d'une ou moins des parties de l'appareil de commande.

La zone mise au potentiel de masse peut se trouver sur une partie de la face de saisie proximale de l'utilisateur lorsqu'il utilise l'appareil.

Selon un exemple de réalisation, nullement limitatif, l'appareil selon l'invention peut comprendre un écran d'affichage, tactile ou non, et une face, dite de saisie, comprenant un moyen de saisie, tel qu'un clavier. Dans ce cas :
- le premier moyen de détection peut être disposé sur/dans l'écran d'affichage, la première surface de commande étant constituée par au moins une partie de l'écran d'affichage, et
- le deuxième moyen de détection peut comprendre un ensemble d'électrodes capacitives disposées sur/dans la face de saisie, la deuxième surface de commande étant constituée par une partie uniquement de ladite face de saisie.

Avantageusement, l'écran d'affichage peut en particulier être mobile en rotation autour d'un axe parallèle à la face de saisie

L'écran peut être fixé ou non à la face de saisie. Autrement dit, l'écran peut, ou peut ne pas, être attaché physiquement à la face de saisie, en particulier au moyen de saisie, par exemple au clavier.

Le moyen de saisie, par exemple un clavier, peut être fixé de manière amovible à l'écran.

L'écran peut par exemple être constitué d'une tablette tactile et le clavier par un clavier nomade.

La face de saisie peut être constituée par le moyen de saisie uniquement, c'est-à-dire que le clavier peut constituer la face de saisie qui ne comprend rien d'autre que le clavier.

Plus généralement et quelle que soit la configuration des première et deuxième parties de l'appareil selon l'invention, la première partie et la deuxième partie peuvent être amovibles l'une par rapport à l'autre de sorte qu'elles peuvent être assemblées et désassemblées à souhait et manuellement, par exemple par l'utilisateur, et ce sans utiliser d'outil.

De plus, la première partie et la deuxième partie peuvent comprendre des moyens d'échange de signaux de manière filaire ou sans fil, en particulier pour se synchroniser en ce qui concerne le potentiel alternatif de garde, ou pour communiquer des signaux mesurés par les premier et deuxième moyens de mesure.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique, selon une vue de côté, d'un premier exemple d'un appareil selon l'invention mettant en oeuvre un dispositif selon l'invention ;
- la FIGURE 2 est une représentation schématique, selon une isométrique, de l'appareil de la FIGURE 1 ;
- la FIGURE 3 est une représentation schématique selon une vue de côté, d'un deuxième exemple d'un appareil selon l'invention mettant en oeuvre un dispositif selon l'invention ;
- la FIGURE 4 est une représentation schématique selon une vue de côté, d'un troisième exemple d'un appareil selon l'invention mettant en oeuvre un dispositif selon l'invention ;
- la FIGURE 5 est une représentation schématique selon une vue de côté, d'un quatrième exemple d'un appareil selon l'invention mettant en oeuvre un dispositif selon l'invention ; et
- la FIGURE 6 est une représentation schématique selon une vue de côté, d'un cinquième exemple d'un appareil selon l'invention mettant en oeuvre un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Nous allons maintenant décrire différentes exemples d'un appareil électronique/informatique selon l'invention mettant en oeuvre différents modes de réalisation d'un dispositif selon l'invention. L'appareil selon l'invention décrit dans la suite peut être un ordinateur, un téléphone ou Smartphone, une console de jeu, un PDA, une tablette tactile, etc., comprenant deux parties, qui en utilisation, forment entre-elles un angle non nul.

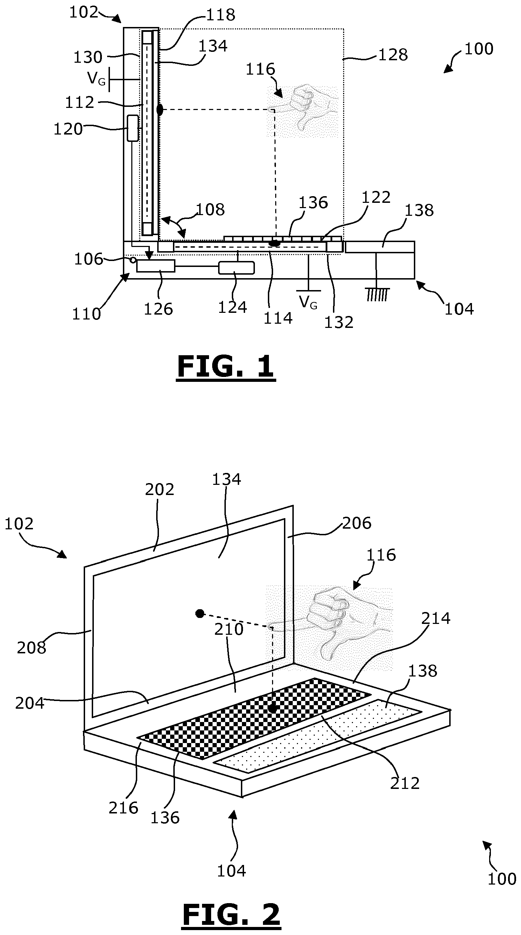

La FIGURE 1 est une représentation schématique, selon une vue de côté, d'un exemple d'un appareil selon l'invention mettant en oeuvre un dispositif selon l'invention.

L'appareil 100 représenté sur la FIGURE 1 comprenant une première partie 102 et une deuxième partie 104, mobiles entre-elles autour d'un axe de rotation 106. Les deux parties 102 et 104 de l'appareil peuvent être dépliées ou repliées autour de l'axe 106 pour former, entre-elles, un angle non nul matérialisé par la double flèche 108.

Dans l'exemple représenté sur la FIGURE 1, l'appareil 100 comprend un dispositif 110 permettant à un utilisateur d'interagir, avec et sans contact, avec l'appareil 100. Ce dispositif forme une ou l'interface homme-machine de l'appareil 100 et met en oeuvre uniquement des capteurs capacitifs.

Le dispositif 110 comprend un premier ensemble 112 de n capteurs capacitifs disposés dans la première partie 102 de l'appareil 100 et un deuxième ensemble 114 de m capteurs capacitifs disposés dans la deuxième partie 104 de l'appareil 100.

Le premier ensemble 112 de capteurs capacitifs permet de déterminer la position/vitesse/accélération/forme/dimension d'au moins un objet de commande 116 par rapport à une surface de commande 118 réalisée par au moins une partie de la face intérieure de la première partie 102 de l'appareil 100, c'est-à-dire la face qui est du côté de la deuxième partie 104 de l'appareil 100. Les capteurs capacitifs de cet ensemble 112 sont reliés à un module de calcul 120, qui en fonction des signaux de mesure reçus des capteurs détermine la position/vitesse/accélération/forme/dimension de l'objet de commande 116 par rapport à la surface de commande 118, cet objet de commande étant ou non en contact avec la surface de commande 118.

Le deuxième ensemble 114 de capteurs capacitifs permet de déterminer la position/vitesse/accélération/forme/dimension d'au moins un objet de commande 116 par rapport à une surface de commande 122 réalisée par une partie uniquement de la face intérieure de la deuxième partie 104 de l'appareil 100, c'est-à-dire la face qui est du côté de la première partie 102 de l'appareil 100. Les capteurs capacitifs de cet ensemble 114 sont reliés à un module de calcul 124, qui en fonction des signaux de mesure reçus des capteurs détermine la position/vitesse/accélération/forme/dimension de l'objet de commande 116 par rapport à la surface de commande 122, cet objet de commande étant ou non en contact avec la surface de commande 122.

La position/vitesse/accélération/forme/dimension de l'objet de commande 116 déterminée par chaque ensemble 112 et 114 de capteurs capacitifs correspond à une position/vitesse/accélération/forme/dimension par rapport à la surface de commande, respectivement 118 et 122, associée à chaque ensemble, que l'objet de commande soit en contact ou non avec chacune des surfaces de commande 118 et 122. La détection de l'objet de commande 116 réalisée par chaque ensemble 112 et 114 peut également comprendre pour au moins un, avantageusement chaque, ensemble de commande, une hauteur de l'objet de commande 116 dans une direction verticale par rapport à la surface de commande, respectivement 118 et 122, associée à l'ensemble de capteurs.

Le dispositif 110 comprend en outre un module de détection 126, relié à chacun des modules de calcul 120 et 124 de chaque ensemble de capteurs 112 et 114. Ce module de détection 126 détermine, en fonction des données de détection déterminées par chacun des modules de calcul 120 et 124 par rapport à chacune des surfaces de détection 118 et 122, une donnée de détection tridimensionnelle de l'objet de commande 116. Dans l'exemple, représenté sur la FIGURE le module de détection 126 est disposé dans la deuxième partie 104 de l'appareil 100. Alternativement, ce module 126 peut être disposé dans la première partie 102 de l'appareil 100.

Ainsi, le dispositif d'interaction 110 permet de créer un volume 128, de commande de (ou d'interaction avec) l'appareil 100 de manière sans contact, ce volume de commande sans contact étant formé et déterminé par les surfaces de commande 118 et 122, et plus particulièrement par les moyens de détection 112 et 114.

Chacun des ensembles 112 et 114 de capteurs capacitifs comprend une pluralité d'électrodes, dites de mesures, et une ou des électroniques de mesure associée (non représentée). Chaque électrode de mesure de chaque ensemble 112 et 114, et l'électronique de mesure qui y est associée sont gardées par un moyen de garde, respectivement 130 et 132, disposé à un potentiel V_{G}, dit de garde, sensiblement égal au potentiel d'alimentation des électrodes de mesure, et qui peut comprendre :
- au moins une autre électrode, qui peut être :
   - soit une ou des électrodes de garde dédiées à cette fonction de garde telle que décrite dans le document, ou
   - soit une ou des électrodes de mesures adjacentes à l'électrode de mesure ; ou
- toute autre surface conductrice, en particulier disposée en arrière ou sur le côté d'une ou des électrodes mesure et au moins une partie de l'électronique de mesure associée ;
selon le principe décrit dans le document FR 2 971 066 A1**.**

Dans l'exemple représenté sur la FIGURE 1, la première partie 102 de l'appareil 100 comprend un écran d'affichage 134 disposé du côté de la face intérieur de la partie 102. C'est la surface de cet écran d'affichage 134 qui réalise au moins en partie, en particulier en totalité, la première surface de commande 118, qui s'étend sensiblement sur toute la surface de l'écran d'affichage 134.

Toujours dans l'exemple représenté sur la FIGURE 1, la deuxième partie 104 de l'appareil 100 comprend un clavier 136 disposé du côté de la face intérieure de la partie 104. La deuxième surface de commande 122 est disposée sous, ou est formée en partie par, ce clavier 134. Plus particulièrement, la deuxième surface de commande s'étend sensiblement sur toute la profondeur de la face intérieure de la partie 104 depuis la jonction entre les parties 102 et 104, jusqu'à l'extrémité du clavier 134 proximale à l'utilisateur lorsque celui-ci utilise l'appareil 100. De plus, la deuxième surface de commande 122 s'étend sensiblement sur toute la largeur de la deuxième partie 104 de l'appareil. En outre, la deuxième partie 104 comporte une zone 138 qui est mise à un potentiel de masse, sensiblement égale au potentiel de l'objet de commande 116, de sorte que, lorsque l'utilisateur pose ses mains ou l'objet de commande 116 sur cette zone, par exemple pour réaliser une saisie sur le clavier 134, ses mains ou l'objet de commande 116 n'est(ne sont) pas détecté(es) pour ne pas perturber l'interaction avec l'appareil 100.

Alternativement, la première partie 102 peut ne pas comprendre un écran d'affichage mais un moyen de saisie. La première partie 102 peut en alternative ne comprendre ni un moyen d'affichage ni un moyen de saisie.

Alternativement, la deuxième partie 104 peut ne pas comprendre un moyen de saisie mais un moyen d'affichage, auquel cas l'appareil 100 comprend deux écrans d'affichage tels que par exemple dans le cas d'une console de jeu à deux écrans, par exemple la Nintendo® DS_{TM}. La deuxième partie 104 peut en alternative ne comprendre ni un moyen d'affichage ni un moyen de saisie.

L'homme du métier pourra combiner l'une quelconque des alternatives décrites pour la deuxième partie avec l'une quelconque des alternatives décrites pour la première partie.

En outre, la première partie et la deuxième partie peuvent être démontables ou amovibles l'une par rapport à l'autre de sorte que l'utilisateur peut les assembler ou les désassembler à souhait, ou même utiliser l'appareil 100 en disposant la première partie et la deuxième partie à distance l'une de l'autre. Dans ce cas, la communication entre l'un au moins des modules de mesure 120 et 124 et le module de détection 126 peut être réalisée de manière sans fil. De plus, le couplage entre les deux parties 102 et 104 pour synchroniser les tensions d'alimentation des capteurs capacitif et/ou pour synchroniser la tension d'alimentation utilisée pour les moyens de garde 130 et 132 peut également être réalisé de manière sans fil.

La FIGURE 2 est une représentation schématique de l'appareil 100 de la FIGURE 1 selon une vue isométrique.

Le premier ensemble 112 de capteurs associé à la première partie 102 de l'appareil 100 peut être disposé sous/sur/dans toute la surface de l'écran 134 du côté de la face intérieure de la partie 102 de l'appareil.

Alternativement, le premier ensemble 112 de capteurs peut comprendre une série de capteurs disposée au niveau d'au moins un des bords 202-208 de la première partie 102 de l'appareil 100, du côté de la face intérieure de la première partie. Ainsi, le premier ensemble 112 peut comprendre une ou deux ou trois ou encore quatre série(s) de capteurs disposés, respectivement au niveau d'un ou deux ou trois ou encore quatre bords 202-208 de la première partie 102. Lorsque le premier ensemble 112 comprend deux séries de capteurs, ces deux séries de capteurs peuvent être disposées au niveau de deux bords adjacents ou opposés de la première partie. Chaque série de capteurs peut, en particulier, être disposée sur la périphérie de l'écran d'affichage 134.

Le deuxième ensemble 114 de capteurs associé à la deuxième partie 104 de l'appareil 100 peut être disposé sous/sur/dans toute la surface de la face de saisie, entre la zone 138 mise à la masse et l'intersection de la deuxième partie 104 avec la première partie 102.

Alternativement, le deuxième ensemble 112 de capteurs peut comprendre une série de capteurs disposée sur au moins un des bords 210-216 du moyen de saisie 136, du côté de la face intérieure de la deuxième partie 104. Ainsi, le deuxième ensemble 112 peut comprendre une ou deux ou trois ou encore quatre série(s) de capteurs disposés, respectivement au niveau d'un ou deux ou trois ou encore quatre bords 210-216 du moyen de saisie 136. Lorsque le deuxième ensemble 112 comprend deux séries de capteurs, ces deux séries de capteurs peuvent être disposés au niveau de deux bords adjacents ou opposés du moyen de saisie. Chaque série de capteurs peut être disposée sur la périphérie du moyen de saisie 136.

Les capteurs de chaque ensemble 112 ou 114 peuvent comprendre des électrodes réalisant une détection autonome, en mode « self détection » ou une détection en collaborant avec une autre électrode, en mode « mutual détection ».

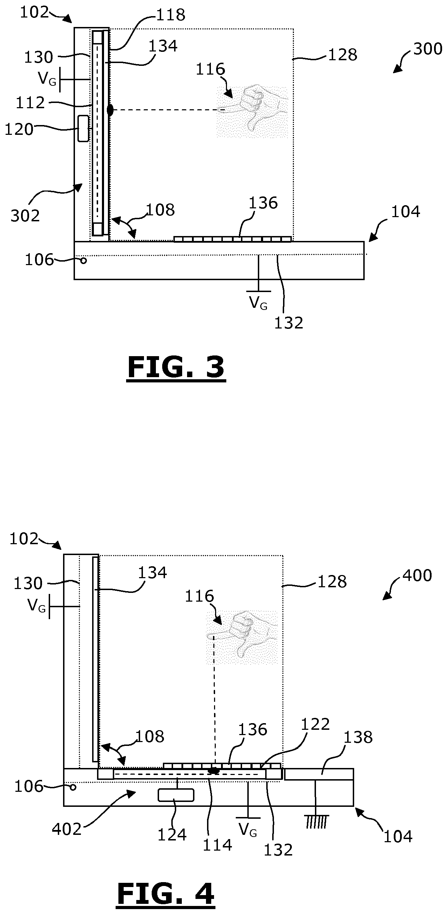

La FIGURE 3 est une représentation schématique d'un deuxième exemple d'un appareil selon l'invention.

L'appareil 300 représenté sur la FIGURE 3 correspond à l'appareil 100 de la FIGURE 1, sans le moyen de détection associé à la deuxième partie. Ainsi, l'appareil 300 comprend un dispositif de détection 302 qui comprend tous les éléments du dispositif 110 de l'appareil 100 représenté sur la FIGURE 1, associés à la première partie 102 de l'appareil 100.

Autrement dit, le dispositif de détection 302 de l'appareil 300 comprend le premier ensemble de capteurs 112 associé à la première partie 102 de l'appareil 300, reliée au premier module de détection 120, et gardé par le premier moyen de garde 130 disposé au potentiel de garde alternatif V_{G}.

La deuxième partie 104 comprend uniquement le deuxième moyen de garde, disposé également au potentiel de garde, et s'étendant sur toute la surface de la deuxième partie 104 de l'appareil 300.

Le premier ensemble de capteurs 112 peut se présenter et être disposé au niveau de la première partie de l'appareil 300, de la même manière que celle décrite, en référence à la FIGURE 2, pour l'appareil 100 et le dispositif 110.

Le dispositif 302 de l'appareil 300 de la FIGURE 3 ne comprend pas non plus le module de calcul 126.

Dans ce mode de réalisation, aucune détection de l'objet de commande n'est réalisée par rapport à une deuxième surface de commande définie par rapport à la deuxième partie 104 de l'appareil 300. L'objet de commande est uniquement détecté par le premier moyen de détection 112 par rapport à la première surface de détection 118 définie par rapport à la première partie 102 de l'appareil 300.

Le fait que la deuxième partie 104, en particulier la face de la deuxième partie 104 située du côté de la première partie 102, soit gardée au potentiel de masse par le deuxième moyen de garde 132 permet d'éviter les interférences créées par cette deuxième partie 104 dans la détection réalisée par le premier moyen de détection 112.

La FIGURE 4 est une représentation schématique d'un troisième exemple d'un appareil selon l'invention.

L'appareil 400 représenté sur la FIGURE 4 correspond à l'appareil 100 de la FIGURE 1, sans le moyen de détection associé à la première partie. Ainsi, l'appareil 400 comprend un dispositif de détection 402 qui comprend tous les éléments du dispositif 110 de l'appareil 100 représenté sur la FIGURE 1, associés à la deuxième partie 102 de l'appareil 100.

Autrement dit, le dispositif de détection 402 de l'appareil 400 comprend le deuxième ensemble de capteurs 114 associé à la deuxième partie 104 de l'appareil 400, reliée au deuxième module de détection 124, et gardé par le deuxième moyen de garde 132 disposé au potentiel de garde alternatif V_{G}. L'appareil 400 comprend également la zone 138 mise à la masse.

La première partie 102 comprend uniquement le premier moyen de garde 130, disposé également au potentiel de garde, et s'étendant sur toute la surface de la première partie 102 de l'appareil 400.

Le dispositif 402 de l'appareil 400 de la FIGURE 3 ne comprend pas non plus le module de calcul 126.

Le deuxième ensemble de capteurs 114 peut se présenter et être disposé au niveau de la première partie de l'appareil 400, de la même manière que celle décrite, en référence à la FIGURE 2, pour l'appareil 100 et le dispositif 110.

Dans ce mode de réalisation, aucune détection de l'objet de commande n'est réalisée par rapport à une première surface de commande définie par rapport à la première partie 102 de l'appareil 300. L'objet de commande est uniquement détecté par le deuxième moyen de détection 114 par rapport à la deuxième surface de détection 122 définie par rapport à la deuxième partie 104 de l'appareil 400.

Le fait que la première partie 102, en particulier la face de la première partie 102 située du côté de la deuxième partie 104, soit gardée au potentiel de masse par le premier moyen de garde 130 permet d'éviter les interférences créées par cette première partie 102 dans la détection réalisée par le deuxième moyen de détection 124.

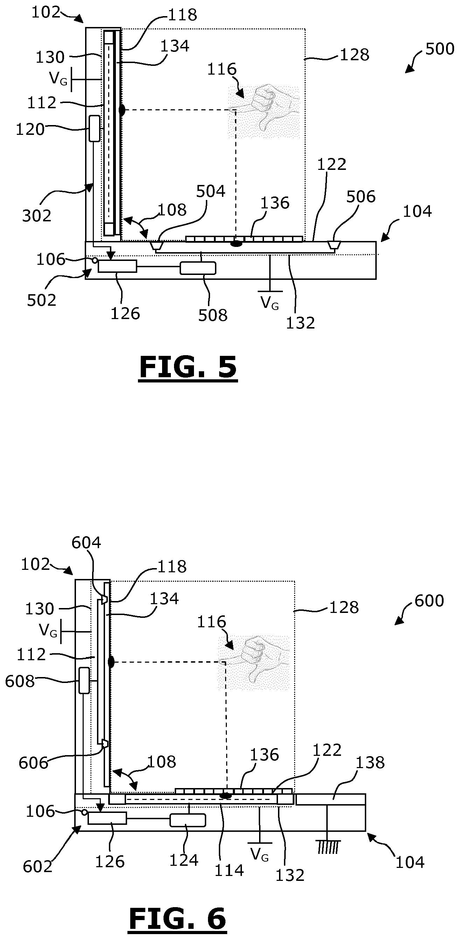

La FIGURE 5 est une représentation schématique d'un quatrième exemple d'un appareil selon l'invention.

L'appareil 500 représenté sur la FIGURE 4 correspond à l'appareil 100 de la FIGURE 1, à la différence que le deuxième moyen de détection comprend un ou plusieurs capteurs de détection 504 et 506 non-capacitifs et non l'ensemble de capteurs capacitifs 114.

Ainsi, l'appareil 500 comprend un dispositif de détection 502 qui comprend tous les éléments du dispositif 110 de l'appareil 100 représenté sur la FIGURE 1, et associés à la première partie 102 de l'appareil 100. Autrement dit, le dispositif de détection 502 de l'appareil 500 comprend le premier ensemble de capteurs 112 associé à la première partie 102 de l'appareil 300, reliée au premier module de détection 120, et gardé par le premier moyen de garde 130 disposé au potentiel de garde alternatif V_{G}.

La deuxième partie 104 comprend le deuxième moyen de garde 132, disposé également au potentiel de garde, et s'étendant sur toute la surface de la deuxième partie 104 de l'appareil 300.

La deuxième partie 104 de l'appareil 500 comprend en outre des capteurs non capacitifs 504 et 506 coopérant avec un deuxième module de détection 508. Le deuxième module de détection 508 et le premier module de détection 120 sont reliés à un moyen de calcul 510, similaire au module de calcul 126 du dispositif 110 décrit en référence à la FIGURE 1.

Les capteurs non capacitifs 504 et 506 peuvent être l'un au moins des moyens suivants :
- un réseau de pixels optiques,
- un réseau de diodes infrarouges,
- un réseau de capteurs optiques de luminosité,
- au moins un émetteur optique associé à au moins un récepteur optique,
- au moins un émetteur ultrason associé à au moins un récepteur ultrason fonctionnant par triangulation ou trilatération,
- au moins deux caméras agencés pour réaliser une mesure par stéréoscopie, et
- au moins une caméra temps de vol.

La FIGURE 6 est une représentation schématique d'un cinquième exemple d'un appareil selon l'invention.

L'appareil 600 représenté sur la FIGURE 6 correspond à l'appareil 100 de la FIGURE 1, à la différence que le premier moyen de détection comprend un ou plusieurs capteurs de détection 604 et 606 non-capacitifs et non l'ensemble de capteurs capacitifs 112.

Autrement dit, le dispositif de détection 602 de l'appareil 600 comprend le deuxième ensemble de capteurs 114 associé à la deuxième partie 104 de l'appareil 600, reliée au deuxième module de détection 124, et gardé par le deuxième moyen de garde 132 disposé au potentiel de garde alternatif V_{G}. L'appareil 600 comprend également la zone 138 mise à la masse.

La première partie 102 comprend le premier moyen de garde 130, disposé également au potentiel de garde, et s'étendant sur toute la surface de la première partie 102 de l'appareil 600.

La première partie 102 de l'appareil 600 comprend en outre des capteurs non capacitifs 604 et 606 coopérant avec un premier module de détection 608. Le premier module de détection 608 et le deuxième module de détection 124 sont reliés à un moyen de calcul 610, similaire au module de calcul 126 du dispositif 110 décrit en référence à la FIGURE 1.

Les capteurs non capacitifs 604 et 606 peuvent être l'un au moins des moyens suivants :
- un réseau de pixels optiques,
- un réseau de diodes infrarouges,
- un réseau de capteurs optiques de luminosité,
- au moins un émetteur optique associé à au moins un récepteur optique,
- au moins un émetteur ultrason associé à au moins un récepteur ultrason fonctionnant par triangulation ou trilatération,
- au moins deux caméras agencés pour réaliser une mesure par stéréoscopie, et
- au moins une caméra temps de vol.

Dans tous les exemples décrits, chacun des premier et deuxième moyen de détection est agencé pour réaliser une détection d'au moins un, en particulier plusieurs, objet(s) de commande par contact de l'au moins un objet de commande avec la surface de commande associé à chaque moyen de détection.

Dans tous les exemples décrits, la première partie 102 et la deuxième partie sont représentées connectées l'une à l'autre. Bien entendu, il est possible que la première partie 102 et la deuxième partie 104 soient déconnectées. Dans ce cas les signaux échangés entre ces deux parties 102 et 104, à savoir les données de détection et les signaux de synchronisation notamment pour le potentiel de garde alternatif V_{G}, sont échangés de manière sans fil entre les deux parties 102 et 104, ces parties comprenant en outre des moyens d'échanges de données/signaux de manière sans fil, par exemple par Bluetooth ou WIFI.

De plus, la première partie 102 et la deuxième partie 104 décrites dans les figures peuvent être interverties.

De plus, dans les exemples décrits, chaque partie 102 et 104 de l'appareil est rectangulaire. Bien entendu chaque partie 102, 104 peut être d'une autre forme, par exemple de forme circulaire, ovale, etc.

En outre, il est possible d'utiliser un seul module de détection et de calcul remplaçant les modules de détection et de calcul et gérant l'ensemble des surfaces de commande.

Par ailleurs, dans tous les exemples décrits, le moyen de saisie 136 peut être remplacé par un écran tactile, en particulier un écran tactile comportant un clavier dit « touchless », i.e. tactile avec/sans contact.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (110; 302; 402; 502; 602) pour interagir sans contact, par l'intermédiaire d'au moins un objet de commande (116), avec un appareil utilisateur (100; 300; 400; 500; 600) électronique et/ou informatique comprenant au moins une première et une deuxième parties (102, 104) qui, en utilisation, forment entre-elles un angle (108) non nul, ledit dispositif (110; 302; 402; 502; 602) comprenant :
- au moins un premier moyen de détection (112; 114) par technologie capacitive, et sans contact, dudit au moins un objet de commande (116) par rapport à une première surface de commande (118; 122) définie par rapport à ladite première partie (102; 104) dudit appareil utilisateur (100; 300; 400; 500; 600), ledit premier moyen de détection comprenant plusieurs électrodes capacitives de mesure;
- au moins une desdites électrodes de mesure étant gardée par un premier moyen (130; 132) de garde à un potentiel alternatif de garde, différent d'un potentiel de masse dudit au moins un objet de commande (116), et sensiblement identique au potentiel de ladite électrode de mesure;
**caractérisée en ce que**
la deuxième partie est configurée pour créer des interférences avec une ou plusieurs des électrodes de mesure de la première partie, et
le dispositif comprend en outre au moins un deuxième moyen (132; 130) de garde pour garder audit potentiel de garde, au moins partiellement, ladite deuxième partie (104; 102) dudit appareil utilisateur (100; 300; 400; 500; 600) pour réduire les interférences créées par la deuxième partie.

2. Dispositif (110; 502; 602) selon la revendication 1, **caractérisé en ce qu'**il comprend en outre :
- au moins un deuxième moyen de détection (114; 504, 506; 604, 606) dudit au moins un objet de commande (116) par rapport à une deuxième surface de commande (122; 118) formant un angle (108) non nul par rapport à la première surface de commande (118; 122) et défini par rapport à la deuxième partie (104; 102) de l'appareil utilisateur (100; 500; 600); et
- au moins un moyen (126) de calcul pour déterminer, en fonction des détections réalisées par les premier et deuxième moyens de détection (112, 114), et éventuellement d'un angle (108) formé par les première et deuxième surfaces de commande (118, 122), une donnée de détection dudit au moins un objet de commande (116).

3. Dispositif (110) selon la revendication précédente, **caractérisé en ce que** le deuxième moyen de détection (114; 112) comprend plusieurs électrodes capacitives de mesure, au moins une desdites électrodes de mesure étant gardée au potentiel de garde par le deuxième moyen de garde (132; 130).

4. Dispositif (502; 602) selon l'une quelconque des revendications 2 et 3, **caractérisé en ce que** le premier moyen de détection et/ou le deuxième moyen de détection (504, 506; 604, 606) comprend au moins un ou une combinaison quelconque des moyens suivants :
- un réseau de pixels optiques,
- un réseau de diodes infrarouges,
- un réseau de capteurs optiques de luminosité,
- au moins un émetteur optique associé à au moins un récepteur optique,
- au moins un émetteur ultrason associé à au moins un récepteur ultrason fonctionnant par triangulation ou trilatération,
- au moins deux caméras agencés pour réaliser une mesure par stéréoscopie, et
- au moins une caméra temps de vol.

5. Dispositif (110; 502; 602) selon l'une quelconque des revendications 2 à 4, **caractérisé en ce que** l'une au moins des parties (102) de l'appareil utilisateur (100; 500; 600) est repositionnable par rotation par rapport à l'autre des parties (102, 104) de sorte que l'une au moins des surfaces de commande (118, 122) est repositionnable par rapport à l'autre surface de commande (118, 122), ledit dispositif (110; 502; 602) comprenant en outre un moyen de mesure de l'angle formé par lesdites surfaces de commande (118, 122).

6. Dispositif (110; 302; 402; 502; 602) selon l'une quelconque des revendications 2 à 5, **caractérisé en ce que** le premier moyen de détection (112; 114), respectivement le deuxième moyen de détection (114; 504, 506; 604, 606), est agencé pour détecter/mesurer :
- une position bidimensionnelle de l'objet de commande (116) dans la première surface de commande (118; 122), respectivement la deuxième surface de commande (122; 118), et/ou
- une distance verticale entre l'objet de commande (116) et la première surface de commande (118; 122), respectivement la deuxième surface de commande (122; 118).

7. Dispositif (110; 302; 402; 502; 602) selon l'une quelconque des revendications 2 à 6, **caractérisé en ce que** le premier moyen de détection (112; 114), respectivement le deuxième moyen de détection (114; 504, 506; 604, 606), est intégré dans/sur la première surface de commande (118; 122), respectivement dans/sur la deuxième surface de commande (122; 118), ladite première surface (118; 122), respectivement ladite deuxième surface (122; 118), étant une surface de la première partie (102; 104), respectivement de la deuxième partie (104; 102), de l'appareil utilisateur (100; 300-600).

8. Dispositif (110) selon l'une quelconque des revendications 2 et 3, **caractérisé en ce que**:
- le premier moyen de détection (112) comprend un premier ensemble d'électrodes capacitives disposées dans/sur/derrière la première surface de commande (118) formée, au moins partiellement, par une paroi/surface/face de la première partie (102) de l'appareil utilisateur (100) disposée du côté de la deuxième partie (104) dudit appareil utilisateur (100), et
- le deuxième moyen de détection (114) comprend un deuxième ensemble d'électrodes capacitives disposées dans/sur/derrière la deuxième surface de commande (122) formée, au moins partiellement, par une paroi/surface/face de la deuxième partie (104) de l'appareil utilisateur (100) disposée du côté de la première partie (102) dudit appareil utilisateur (100);
au moins une des électrodes de chaque ensemble d'électrodes étant gardée à un potentiel alternatif de garde, différent d'un potentiel de masse de l'objet de commande (116), et sensiblement identique au potentiel de ladite électrode.

9. Dispositif selon la revendication 8, **caractérisé en ce que** la première surface de commande et/ou la deuxième surface de commande est une surface tactile.

10. Appareil (100; 300-600) électronique et/ou informatique comprenant au moins une première et une deuxième parties (102, 104) qui, en utilisation, forment entre-elles un angle (108) non nul, muni d'un dispositif (110; 302; 402; 502; 602) selon l'une quelconque des revendications précédentes pour interagir avec ledit appareil (100; 300-600).

11. Appareil (100; 300; 500; 600) selon la revendication 10, comprenant en outre un deuxième moyen de détection dudit au moins un objet de commande par rapport à une deuxième surface de commande formant un angle non nul par rapport à la première surface de commande et défini par rapport à la deuxième partie de l'appareil utilisateur et **caractérisé en ce qu'**au moins l'une des première et deuxième parties (102, 104) comprend un écran d'affichage (134), le premier moyen de détection (112), respectivement le deuxième moyen de détection (112; 604, 606), est intégré dans/sur/autour/en périphérie/derrière ledit écran d'affichage (134) de sorte que la première surface de commande (118), respectivement la deuxième surface de commande (118), est formée par au moins une partie dudit écran d'affichage (134) et/ou par un plan parallèle audit écran d'affichage (134).

12. Appareil (100; 400; 500; 600) selon la revendication 11, **caractérisé en ce qu'**au moins l'une des première et deuxième parties (102, 104) comprend une surface de saisie, comportant au moins un moyen (136) de saisie de données, tel qu'un clavier, le premier moyen de détection (114), respectivement le deuxième moyen de détection (114; 504, 506) est intégré dans/sur/autour/en périphérie/derrière ladite surface de saisie de sorte que la première surface de commande (114), respectivement la deuxième surface de commande (114), est formée par au moins une partie de ladite surface de saisie et/ou par un plan parallèle à ladite surface de saisie.

13. Appareil (100; 300; 400; 500; 600) selon la revendication précédente, **caractérisé en ce que** la surface de commande (122) est formée par une partie uniquement de la surface de saisie, ladite surface de saisie comportant au moins une zone (138) prévue pour y poser au moins une main d'un utilisateur lors d'une saisie, ladite zone (138) étant mise au potentiel de masse.

14. Appareil (100) selon l'une quelconque des revendications 11 à 13, **caractérisé en ce qu'**il comprend un écran d'affichage de saisie (134) et une surface de saisie comprenant un moyen de saisie (136), tel qu'un clavier :
- le premier moyen de détection (112) étant disposé sur/dans l'écran d'affichage, la première surface de commande (118) étant constituée par au moins une partie dudit écran d'affichage (134),
- le deuxième moyen de détection (114) comprenant un ensemble d'électrodes capacitives disposées sur/dans la surface de saisie, la deuxième surface de commande (122) étant constituée par une partie uniquement de ladite surface de saisie.

15. Appareil (100; 300-600) selon l'une quelconque des revendications 10 à 14, **caractérisé en ce que** la première partie (102; 104) et la deuxième partie (104; 102) sont amovibles l'une par rapport à l'autre de sorte qu'elles peuvent être assemblées et désassemblées à souhait et manuellement.

16. Appareil (100; 300-600) selon l'une quelconque des revendications 10 à 15, **caractérisé en ce que** la première partie (102; 104) et la deuxième partie (104; 102) comprennent des moyens d'échange de signaux de manière filaire ou sans fil.

## Patentansprüche

1. Vorrichtung (110; 302; 402; 502; 602), um mit einem elektronischen und/oder computergesteuerten Benutzergerät (100; 300; 400; 500; 600) über zumindest ein Steuerobjekt (116) berührungslos zu interagieren, das wenigstens einen ersten und einen zweiten Teil umfasst (102, 104), die im Gebrauch miteinander einen von Null verschiedenen Winkel (108) bilden, wobei die Vorrichtung (110; 302; 402; 502; 602) umfasst:
- zumindest eine erste Erfassungseinrichtung (112; 114) durch eine kapazitive Technologie, und berührungslos, dieses zumindest eines Steuerobjekts (116) gegenüber einer ersten Steuerfläche (118; 122), die durch die Beziehung zu dem ersten Teil (102; 104) der Benutzervorrichtung (100; 300; 400; 500; 600) definiert ist, wobei die erste Erfassungseinrichtung mehrere kapazitive Messelektroden umfasst;
- zumindest eine dieser Messelektroden, die durch eine erste Schutzeinrichtung (130; 132) an einem alternativen Schutzpotential gehalten wird, das zu einen Erdungspotential des wenigstens eines Steuerobjekts (116) unterschiedlich ist und mit dem Potential der Messelektrode im Wesentlichen identisch ist;
**dadurch gekennzeichnet, dass**
der zweite Teil konfiguriert ist, um mit einer oder mehreren Messelektroden des ersten Teiles Interferenzen zu erzeugen,
und die Vorrichtung ferner zumindest eine zweite Schutzeinrichtung (132; 130) umfasst um das zweite Teil (104; 102) des Benutzergeräts (100; 300; 400; 500; 600) zumindest teilweise beim Schutzpotential zu behalten, um die durch den zweiten Teil erzeugt Interferenzen zu reduzieren.

2. Vorrichtung (100; 502; 602) nach Anspruch 1, **dadurch gekennzeichnet, dass** sie ferner umfasst:
- zumindest eine zweite Erfassungseinrichtung (114; 504, 506; 604, 606) des wenigstens einen Steuerobjekts (116) relativ zu einer zweiten Steuerfläche (122; 118), die einen von Null verschiedenen Winkel bezüglich der ersten Steuerfläche (118; 122) bildet, der bezüglich des zweiten Teiles (104; 102) des Benutzergeräts (100; 500; 600) definiert ist; und
- zumindest ein Berechnungsmittel (126), um Erfassungsdaten des wenigstens eines Steuerobjektes (116) aufgrund der durch die ersten und zweiten Erfassungseinrichtungen (112, 114) durchgeführt Erfassungen und eventuell einen Winkel (108) zu bestimmen, der durch die erste und zweite Steuerfläche (118, 122) gebildet wird.

3. Vorrichtung (110) nach dem vorhergehenden Anspruch, **dadurch gekennzeichnet, dass** die zweite Erfassungseinrichtung (114; 112) mehrere kapazitive Messelektroden umfasst, wobei zumindest eine der Messelektrode durch die zweite Schutzeinrichtung (132; 130) an dem Schutzpotential gehalten wird.

4. Vorrichtung (502; 602) nach irgendeinem der Ansprüche 2 und 3, **dadurch gekennzeichnet, dass** die erste Erfassungseinrichtung und/oder die zweite Erfassungseinrichtung (504, 506; 604, 606) zumindest eines oder eine Kombination der folgenden Mittel umfasst:
- ein Netzwerk von optischen Pixeln,
- ein Netzwerk von Infrarot-Dioden,
- ein Netzwerk von optischen Lichtsensoren,
- zumindest einen optischen Emitter, der mit zumindest einem optischen Empfänger verbunden ist,
- zumindest ein Ultraschallsender, der mit einem Ultraschallempfänger verbunden ist, der durch Triangulation oder Trilateration funktioniert,
- zumindest zwei Kameras, die für stereotypische Messungen angeordnet sind, und
- zumindest eine Flugzeit-Kamera.

5. Vorrichtung (110; 502; 602) nach irgendeinem der Ansprüche 2 bis 4, **dadurch gekennzeichnet, dass** zumindest eines der Teile (102) des Benutzergerätes (100; 500; 600) durch Drehung in Bezug auf die anderen Teile (102, 104) erneut positionierbar ist, so dass zumindest eine der Steuerfläche (118, 122) in Bezug auf die andere Steuerfläche erneut positionierbar ist, wobei die genannte Vorrichtung (110; 502; 602) ferner eine Messvorrichtung umfasst, um den durch die genannte Steuerfläche (118, 122) gebildeten Winkel zu messen.

6. Vorrichtung (110; 302; 402; 502; 602) nach irgendeinem der Ansprüche 2 bis 5, **dadurch gekennzeichnet, dass** die erste Erfassungsreinrichtung (112; 114), beziehungsweise die zweite Erfassungseinrichtung (114; 504, 506; 604, 606) eingerichtet ist zum Erkennen/Messen:
- einer zweidimensionalen Position des Steuerobjektes (116) in der ersten Steuerfläche (118; 122), beziehungsweise der zweiten Steuerfläche (122; 118), und/oder
- eines senkrechten Abstands zwischen dem Steuerobjekt (116) und der ersten Steuerfläche (118, 122), beziehungsweise der zweiten Steuerfläche (122; 118).

7. Vorrichtung (110; 302; 402; 502; 602) nach irgendeinem der Ansprüche 2 bis 6, **dadurch gekennzeichnet, dass** die erste Erfassungseinrichtung (112; 114), beziehungsweise die zweite Erfassungseinrichtung (114; 504, 506; 604, 606), in/auf der ersten Steuerfläche (118; 122), beziehungsweise in/auf der zweiten Steuerfläche (122; 118), integriert ist, wobei die genannte erste Fläche (118; 122), beziehungsweise genannte zweite Fläche (122; 118), eine Fläche des ersten Teils (102; 104), beziehungsweise des zweiten Teils (104; 102) des Benutzergerätes (100; 300-600) ist.

8. Vorrichtung (110) nach irgendeinem der Ansprüche 2 und 3, **dadurch gekennzeichnet, dass**:
- die erste Erfassungseinrichtung (112) ein erstes Bündel von kapazitiven Elektroden umfasst, die in/auf/hinten der ersten Steuerfläche (118) angeordnet sind, wobei die erste Steuerfläche (118), zumindest teilweise, von einer Wand/Fläche/Seite des ersten Teils (102) des Benutzergerätes (100) gebildet ist, wobei die Wand/Fläche/Seite auf der Seite des zweiten Teils (104) des Benutzergerätes (100) angeordnet ist, und
- die zweite Erfassungseinrichtung (114) ein zweites Bündel von kapazitiven Elektroden umfasst, die in/auf/hinten der zweiten Steuerfläche (122) angeordnet sind, wobei die zweite Steuerfläche (122), zumindest teilweise, von einer Wand/Fläche/Seite des zweiten Teils (104) des Benutzergerätes (100) gebildet ist, wobei die Wand/Fläche/Seite auf der Seite des ersten Teils (102) des Benutzergerätes (100) angeordnet ist,
zumindest eine der Elektroden von jedem Elektrodenbündel an einer alternativen Schutzpotential gehalten ist, das unterschiedlich zum Erdungspotential des Steuerobjektes (116) ist, und mit dem Potential der Elektrode im wesentlich identisch ist.

9. Vorrichtung nach Anspruch 8, **dadurch gekennzeichnet, dass** die erste Steuerfläche und/oder die zweite Steuerfläche eine berührungsempfliche Oberfläche ist.

10. Elektronisches und/oder computerbasiertes Gerät (100; 300-600), das zumindest einen ersten und zweiten Teil (102; 104) umfasst, die im Gebrauch miteinander einen von Null verschiedenen Winkel (108) bilden, mit einer Vorrichtung (110; 302; 402; 502; 602) gemäß irgendeinem der vorhergehenden Ansprüche versehen, um mit dem Gerät (100; 300-600) zu interagieren.

11. Gerät (100; 300; 500; 600) nach Anspruch 10, das ferner eine zweite Erfassungseinrichtung des Steuerobjektes relativ zu einer zweiten Steuerfläche umfasst, die bezüglich der ersten Steuerfläche einen von Null verschiedenen Winkel bildet, der bezüglich des zweiten Teils des Benutzergerät definiert ist, und **dadurch gekennzeichnet, dass** zumindest eines der ersten und zweiten Teile (102, 104) einen Bildschirm (134) umfasst, wobei die erste Erfassungseinrichtung (112), beziehungsweise die zweite Erfassungseinrichtung (112; 604, 606), in/auf/um/an der Peripherie/hinter dem Bildschirm integriert ist, so dass die erste Steuerfläche (118) beziehungsweise die zweite Steuerfläche (118) von wenigstens einem Teil des Bildschirms (134) und/oder von einer zum Bildschirm parallelen Ebene gebildet ist.

12. Gerät (100; 400; 500; 600) nach Anspruch 11, **dadurch gekennzeichnet, dass** zumindest einer der ersten und zweiten Teile (102, 104) eine Eingabefläche umfasst, die zumindest eine Dateneingabeeinrichtung umfasst (136), wie zum Beispiel eine Tastatur, wobei die erste Erfassungseirichtung (114), beziehungsweise die zweite Erfassungseinrichtung (114; 504, 506), in/auf/um/an der Peripherie/hinter der Eingabefläche integriert ist, so dass die erste Steuerfläche (114), beziehungsweise die zweite Steuerfläche (114), von zumindest einem Teil der Eingabefläche und/oder von einer zu der Eingabefläche parallelen Ebene gebildet ist.

13. Gerät (100; 300; 400; 500; 600) nach dem vorhergehenden Anspruch, **dadurch gekennzeichnet, dass** die Steuerfläche (122) nur von einem Teil der Eingabefläche gebildet ist, wobei die genannte Eingabefläche zumindest eine Zone (138) aufweist, die dazu vorgesehen ist, um zumindest eine Hand des Benutzers während des Eingabe darauf abzulegen, wobei die genannte Zone (138) auf das Erdungspotential gesetzt ist.

14. Gerät (100) nach irgendeinem der Ansprüche 11 bis 13, **dadurch gekennzeichnet, dass** das Gerät ein Eingabebildschirm (134) und eine Eingabefläche umfasst, wobei die Eingabefläche eine Eingabeeinrichtung, wie zum Beispiel eine Tastatur, umfasst:
- wobei die erste Erfassungseinrichtung (112) auf/in dem Bildschirm (134) angeordnet ist, wobei die erste Steuerfläche (118) aus zumindest einen Teil des Bildschirmes (134) besteht,
- wobei die zweite Erfassungseinrichtung (141) ein Bündel von kapazitiven Elektroden umfasst, die auf/in der Eingabefläche angeordnet sind, wobei die zweite Steuerfläche (122) aus nur einen Teil der Eingabefläche besteht.

15. Gerät (100; 300-600) nach irgendeinem der Ansprüche 10 bis 14, **dadurch gekennzeichnet, dass** der erste Teil (102; 104) und der zweite Teil (104; 102) bezüglich einander abnehmbar sind, so dass sie nach Wunsch und manuell montiert und demontiert werden können.

16. Gerät (100; 300-600) nach irgendeinem der Ansprüche 10 bis 15, **dadurch gekennzeichnet, dass** der erste Teil (102; 104) und der zweite Teil (104; 102) verdrahtete oder kabellose Signalaustauscheinrichtungen umfassen.

## Claims

1. Device (110; 302; 402; 502; 602) to interact without contact, via at least one control object (116), with an electronic and/or computerized user device (100; 300; 400; 500; 600) comprising at least a first and a second parts (102, 104) which, in use, form with one another a non-zero angle (108), said device (110; 302; 402; 502; 602) comprising:
- at least a first detection means (112; 114) by capacitive technology, and without contact, of the said at least one control object (116) relative to a first control surface (118; 122) defined in relation to said first part (102; 104) of said user device (100; 300; 400; 500; 600), said first detection means comprising a plurality of measurement capacitive electrodes;
- at least one of the said measurement capacitive electrodes being guarded by a first guard means (130; 132) at an alternative guard potential, different from a ground potential of the said at least one control object (116) and substantially identical to the potential of the said measurement electrode;
**characterized in that**
the second part is configured to create interference with one or more of the measurement electrodes of the first part, and
the device further comprises at least one second guard means (132; 130) to guard to said guard potential, at least partially, the said second part (104; 102) of the said user device (100; 300; 400; 500; 600) to reduce the interferences created by the second part.

2. Device (110; 502; 602) according to claim 1, **characterized in that** it further comprises:
- at least one second detection means (114; 504, 506; 604, 606) of said at least one control object (116) relative to a second control surface (122; 118) forming a non-zero angle (108) in relation to the first control surface (118; 122) and defined in relation to the second part (104; 102) of the user device (100; 500; 600); and
- at least one computing means (126) to determine, based on the detections performed by the first and second detection means (112, 114), and optionally of an angle (108) formed by the first and second control surfaces (11, 122), a detection data of the said at least one control object (116).

3. Device (110) according to the preceding claim, **characterized in that** the second detection means (114; 112) comprises a plurality of measurement capacitive electrodes, at least one of said measurement electrodes being kept at guard potential by the second guard means (132; 130).

4. Device (502; 602) according to any one of the claims 2 and 3, **characterized in that** the first detection means and/or the second detection means (504, 506; 604, 606) comprises at least one or any combination of the following means:
- a network of optical pixels,
- a network of infrared diodes,
- a network of optical sensors of luminosity,
- at least one optical transmitter associated with at least one optical receiver,
- at least one ultrasound transmitter associated with at least one ultrasonic receiver operating by triangulation or trilateration,
- at least two cameras arranged for stereoscopic measurement, and
- at least a flying time camera.

5. Device (110; 502; 602) according to any one of claims 2 to 4, **characterized in that** at least one of the parts (102) of the user device (100; 500; 600) is repositionable by rotation relative to the other one of the parts (102, 104) so that at least one of the control surfaces (118, 122) is repositionable relative to the other control surface (118, 122), the said device (110; 502; 602) further comprising a means for measuring the angle formed by said control surfaces (118, 122).

6. Device (110; 302; 402; 502; 602) according to any one of the claims 2 to 5, **characterized in that** the first detection means (112; 114), respectively the second detection means (114; 504, 506; 604, 606) is arranged to detect/measure:
- a two-dimensional position of the control object (116) in the first control surface (118; 122), respectively the second control surface (122; 118), and / or
- a vertical distance between the control object (116) and the first control surface (118; 122), respectively the second control surface (122; 118).

7. Device (110; 302; 402; 502; 602) according to any one of the claims 2 to 6, **characterized in that** the first detection means (112; 114), respectively the second detection means (114; 504, 506; 604, 606) is integrated in/on the first control surface (118; 122), respectively in/on the second control surface (122; 118), said first surface (118; 122) respectively said second surface (122; 118), being a surface of the first part (102; 104), respectively of the second part (104; 102), of the user device (100; 300-600).

8. Device (110) according to any one of claims 2 and 3, **characterized in that**:
- the first detection means (112) comprises a first set of capacitive electrodes disposed in/on/behind the first control surface (118) formed, at least partially, by a wall/surface/face of the first part (102) of the user apparatus (100) disposed on the side of the second part (104) of the said user device (100), and
- the second detection means (114) comprises a second set of capacitive electrodes disposed in/on/behind the second control surface (122) formed, at least partially, by a wall/surface/face of the second part (104) of the user apparatus (100) disposed on the side of the first part (102) of the said user device (100);
at least one of the electrodes of each set of electrodes being kept at an alternating guard potential different from a ground potential of the control object (116) and substantially identical to the potential of said electrode.

9. Device according to claim 8, **characterized in that** the first control surface and/or the second control surface is a tactile surface.

10. Electronic and/or computing apparatus (100; 300-600) comprising at least a first and a second parts (102, 104) which, in use, form a non-zero angle (108) therebetween, provided with a device (110; 302; 402; 502; 602) according to any one of the preceding claims for interacting with said apparatus (100; 300-600).

11. Apparatus (100; 300; 500; 600) according to claim 10, further comprising a second detection means of the said at least one control object relative to a second control surface forming a non-zero angle with respect to the first control surface and defined in relation to the second part of the user device and **characterized in that** at least one of the first and second parts (102, 104) comprises a display screen (134), the first detecting means (112), respectively the second detection means (112; 604, 606), is integrated in/on/around/peripherally/behind the said display screen (134) so that the first control surface (118) respectively the second control surface (118), respectively, is formed by at least a part of the said display screen (134) and/or by a plane parallel to said display screen (134).

12. Apparatus (100; 400; 500; 600) according to claim 11, **characterized in that** at least one of the first and second parts (102, 104) comprises an input surface, comprising at least one data input means (136) such as a keyboard, the first detection means (114), respectively the second detecting means (114; 504, 506) is integrated in/on/around/periphery/behind the said input surface so that the first control surface (114), respectively the second control surface (114), is formed by at least a part of the said input surface and/or by a plane parallel to the said input surface.

13. Apparatus (100; 300; 400; 500; 600) according to the preceding claim, **characterized in that** the control surface (122) is formed by a part only of the input surface, the said input surface comprising at least one zone (138) intended to put there at least one hand of a user during an input, the said zone (138) being set to ground potential.

14. Apparatus (100) according to any one of the claims 11 to 13, **characterized in that** it comprises an input display screen (134) and an input surface comprising an input means (136), such as a keyboard:
- the first detection means (112) being disposed on/in the display screen, the first control surface (118) being comprised of at least a part of said display screen (134),
- the second detection means (114) comprising a set of capacitive electrodes disposed on/in the input surface, the second control surface (122) being comprised of a part only of the said input surface.

15. Apparatus (100; 300-600) according to any one of claims 10 to 14, **characterized in that** the first part (102; 104) and the second part (104; 102) are removable with respect to one another so that they can be assembled and disassembled as desired and manually.

16. Apparatus (100; 300-600) according to any one of claims 10 to 15, **characterized in that** the first part (102; 104) and the second part (104; 102) comprise wired or wireless signal-exchange means.
